# EUROPEAN PATENT APPLICATION

(11) **EP 1 635 524 A1**
(43) Date of publication of application: **15.03.2006**
(21) Application number: 05108403.6
(22) Date of filing: 13.09.2005
(51) Int. Cl.: H04L 12/58

(54) **A method and system for identifying and blocking spam email messages at an inspecting point**

(30) Priority: 14.09.2004 US 609344 P; 07.12.2004 US 4942
(71) Applicant: Aladdin Knowledge Systems, Ltd., Tel Aviv 61110 (IL)
(72) Inventor: Gruper, Shimon, 26307, Haifa (IL); Margalit, Yanki, 52223, Ramat Gan (IL); Margalit, Dany, 52223, Ramat Gan (IL)
(74) Representative: Leone, Mario

(57) **Abstract**

In one aspect, the present invention is directed to a method for identifying and blocking spam email messages at an inspecting point, the method comprises the steps of: measuring the flow rate of email messages sent from an originator through the inspecting point; and if the measured flow rate exceeds a given threshold, email messages transmitted from the originator are classified as spam and/or the originator is classified as a spammer. In another aspect, the present invention is directed to a system for identifying and blocking spam email messages at an inspecting point, the system comprising: a spam detector, for classifying an email message as spam-suspected; a flow rate calculator, for calculating a flow rate of spam-suspected email messages that have reached the inspecting point; a spam indicator, for classifying spam-suspected email messages as spam by their flow rate and a threshold thereof.

## Description

### Field of the Invention

The present invention relates to the field of inhibiting spread of Spam mail.

### Background of the Invention

Spam, also referred to as unsolicited bulk email, or "junk" email, is an undesired email that is sent to multiple recipients, with a purpose to promote a business, an idea or a service. Spam is also used by hackers to spread vandals and viruses in email, or to trick users into visiting hostile or hacked sites, which attack innocent surfers. Spam usually promotes "get rich quickly" schemes, porn sites, travel/vacation services, and a variety of other topics.

eSafe Gateway and eSafe Mail of Aladdin Knowledge Systems Ltd. are typical spam facilities that can block incoming or outgoing email based on the sender, recipient, body text, or subject text. Administrators can block or get a copy of mail messages containing specific keywords. For example, they can block email containing profanity or confidential project names. This feature blocks messages that violate corporate policies, thereby allowing full unattended enforcement of these policies. They can also prevent attacks by hackers or vandal programs that use SMTP as a way of sending stolen information out of the network.

The term "False Positive" refers herein to classifying an email message as spam despite of the fact that it is not a spam.

The major problem with spam detection is that classifying an email as spam is carried out according to subjective examination rather than objective examination. For example, an email message that comprises the word "travel" may be classified as spam when received in the user's office email box, however when received at the home email box of the same user, it can be considered as non-spam, since the user may be interested in traveling deals.

Therefore, it is an object of the present invention to provide a method and system for classifying email messages as spam.

It is another object of the present invention to provide a method and system for inhibiting spread of spam.

It is a further object of the present invention to provide a method and system for inhibiting spread of spam, upon which the number of false positives is decreased in comparison to the prior art.

It is yet a further object of the present invention to provide a method and system for detecting spam originators.

Other objects and advantages of the invention will become apparent as the description proceeds.

### Summary of the Invention

In one aspect, the present invention is directed to a method for identifying and blocking spam email messages on an inspecting point, the method comprising the steps of:
- measuring a flow rate of email messages sent from an originator through the inspecting point;
- if the measured flow rate exceeds a given threshold, classifying email messages transmitted from the originator as spam and/or classifying the originator as a spammer.

The method may further comprise:
- holding spam suspected email messages at the inspecting point, and
- releasing the spam suspected email messages upon indicating the messages as non-spam email messages.

According to one embodiment of the invention, the flow rate is based on a number of email messages received at the gateway from the originator in a time period. According to another embodiment of the invention, the flow rate is based on a number of email messages received from two or more originators having a common denominator at the gateway in a time period.

The common denominator may be a domain, an email address, certain keyword(s) within the text of the email messages, certain keyword(s) within the title of the email messages, certain keyword(s) within the email address of the originator of the email messages, certain keyword(s) within the email address of the recipient(s) of the email messages, and so forth.

The inspecting point may be a gateway server, mail server, firewall server, proxy server, ISP server, VPN server, a server that filters incoming data to an organization network, etc.

On another aspect, the present invention is directed to a system for identifying and blocking spam email messages at an inspecting point, the system comprising:
- a spam detector, for classifying an email message as spam-suspected;
- a flow rate calculator, for calculating a flow rate of spam-suspected email messages that have been reached to the inspecting point;
- a spam indicator, for classifying spam-suspected email messages as spam by their flow rate and a threshold thereof.

According to one embodiment of the invention, the flow rate calculator comprises:
- a clock device, for indicating a time period;
- a counter, for counting spam-suspected email messages.

According to another embodiment of the invention, the flow rate calculator comprises:
- a clock device, for indicating time;
- a database, for storing information about spam-suspected email messages that have reached the inspecting point.

The spam detector, flow rate calculator and spam indicator are computerized facilities.

### Brief Description of the Drawings

The present invention may be better understood in conjunction with the following figures:
Fig. 1 schematically illustrates the operation and infrastructure of email delivering and blocking, according to the prior art.
Fig. 2 is a flowchart of a method for classifying an email message as spam, according to one embodiment of the invention.
Fig. 3 schematically illustrates a system for classifying an email message as spam, according to one embodiment of the invention.
Fig. 4 illustrates further details of the system illustrated in Fig. 3, according to one embodiment of the invention.
Fig. 5 schematically illustrates a flow-rate calculator, according to one embodiment of the invention.
Fig. 6 schematically illustrates a flow-rate calculator, according to another embodiment of the invention.
Fig. 7 schematically illustrates a list of incoming email messages to an inspecting point, according to one embodiment of the invention.

### Detailed Description of Preferred Embodiments

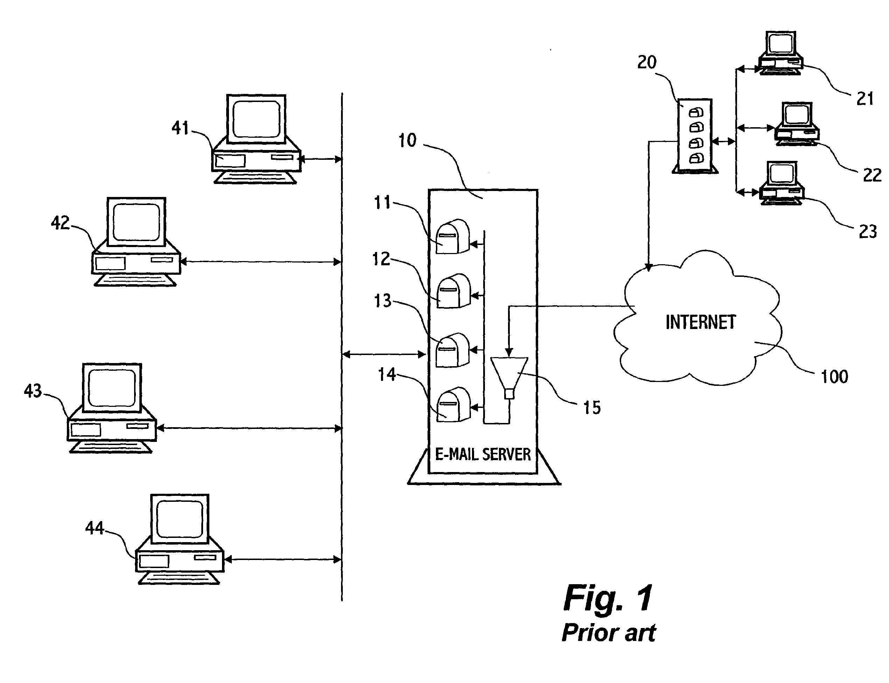

Fig. 1 schematically illustrates the operation and infrastructure of email delivering and blocking, according to the prior art. A mail server 10 maintains email accounts 11 to 14, which belongs to users 41 to 44 respectively. Another mail server 20 serves users 21 to 23. The mail server 10 also comprises an email blocking facility 15, for detecting the presence of malicious code within incoming email messages.

An email message sent from, e.g., user 21 to, e.g. user 42, passes through the mail server 20, through the Internet 100, until it reaches to mail server 10. At the mail server 10 the email message is scanned by the blocking facility 15, and if no malicious code is detected, it is then stored in email box 12, which belongs to user 42. The next time user 42 opens his mailbox 12 he finds the delivered email message.

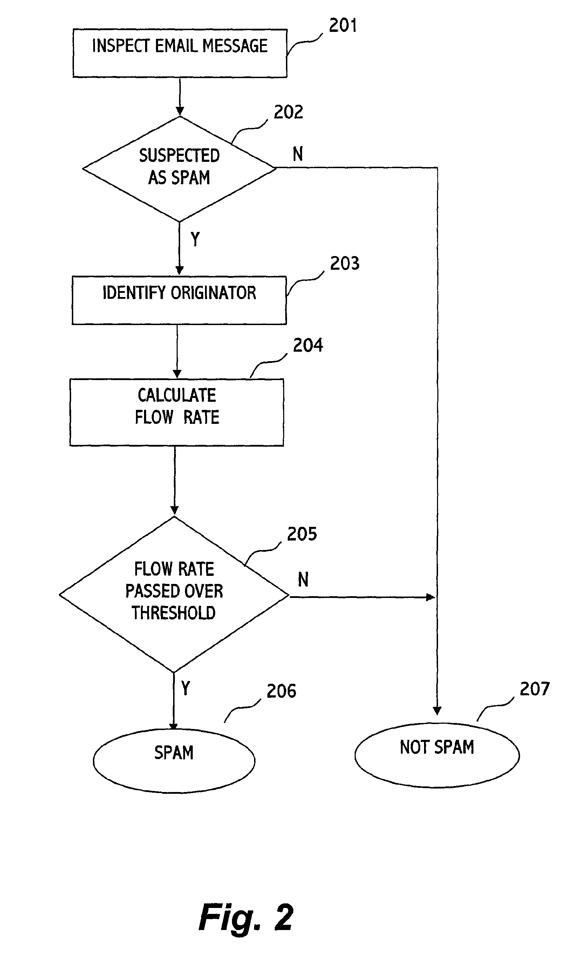

Fig. 2 is a flowchart of a method for classifying an email message as spam, according to one embodiment of the invention. The method is applied when an email reaches an inspecting point (gateway, mail server, firewall, etc.).

At block 201 the email is "inspected", i.e. one or more tests are carried out in order to determine whether the email message is suspected as spam. As known to a person of ordinary skill in the art, there are a variety of tests to classify an email as spam, such as searching for certain keyword(s) in the email text or title.

From block 202, if the email is not suspected as spam, the flow continues with block 207, otherwise the flow continues with block 203.

On block 203, the identity of the originator of the email message is identified.

On block 204, a "flow rate" of the email messages from the particular originator is calculated.

From block 205, if the flow rate exceeded a certain threshold, the flow continues to block 206, otherwise to block 207.

The method decreases the number of false positives since it takes into consideration a plurality of email messages instead of analyzing each email message individually. Moreover, the method allows also detecting "spammers", i.e, spamming originators.

An originator can be identified in a variety of ways. According to one embodiment of the invention, an originator is identified by the email address of the sender of an email message. Even if the spam sender's email address is a fake email address, a plurality of email messages sent from the same "sender" can still indicate that the email messages are spam messages.

It is common that spammers send email messages which differ by their size, text, etc., although they promote the same subject, in order to overcome signature detection and virus detection methods. According to a preferred embodiment of the present invention the most common keywords in incoming email messages are detected, and in case the common keywords indicate spam, further email messages having these keywords are blocked.

The term Flow Rate refers herein as to an expression representing a quantity of email messages sent from an originator and pass through an inspection point in a time period. For example: F = E / T, where: F is the flow rate; E is the number of email messages received in an inspection point from an originator (or a group of originators) during time T. Of course a combination of these parameters can also present a flow rate.

The threshold does not have to be an absolute number, but also an expression, such as, for example, 70% of the average flow rate of incoming email messages in 24 hours.

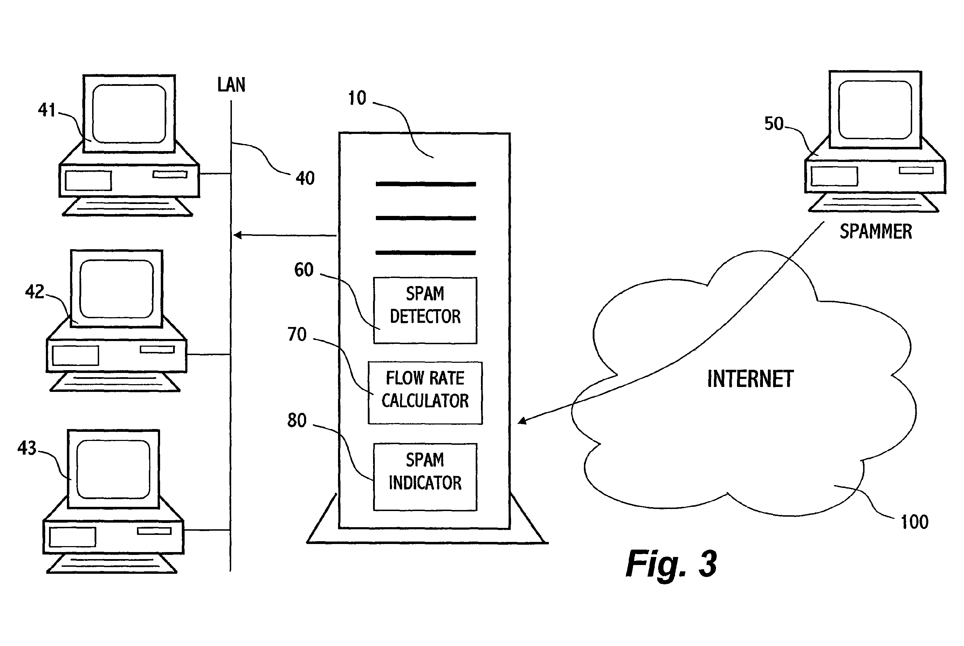

Fig. 3 schematically illustrates a system for classifying an email message as spam and infrastructure thereof, according to one embodiment of the invention. Users 41, 42 and 43 are interconnected by a LAN 40. An inspection facility 10 (e.g. a gateway server, firewall server, mail server, etc.) operating at an inspection point to LAN 40, inspects incoming email messages to LAN 40 in order to block spam messages. When a spammer 50 tries to send spain mail to one or more of the users 41, 42 and 43, the email messages are inspected by the inspection facility 10.

The inspection facility 10 comprises a spam detector 60, and a flow rate calculator 70 and spam indicator 80. The spam detector 70 indicates if an email message is suspected as spam. The flow rate calculator calculates the flow rate of spam-suspected email messages from certain originator. The spam indicator 80 indicates if the spam-suspected email messages are indeed spam. The flow rate calculator 60, the spam detector 70 and the spam indicator 80 are programmed facilities, i.e. they may employ software and/or hardware elements.

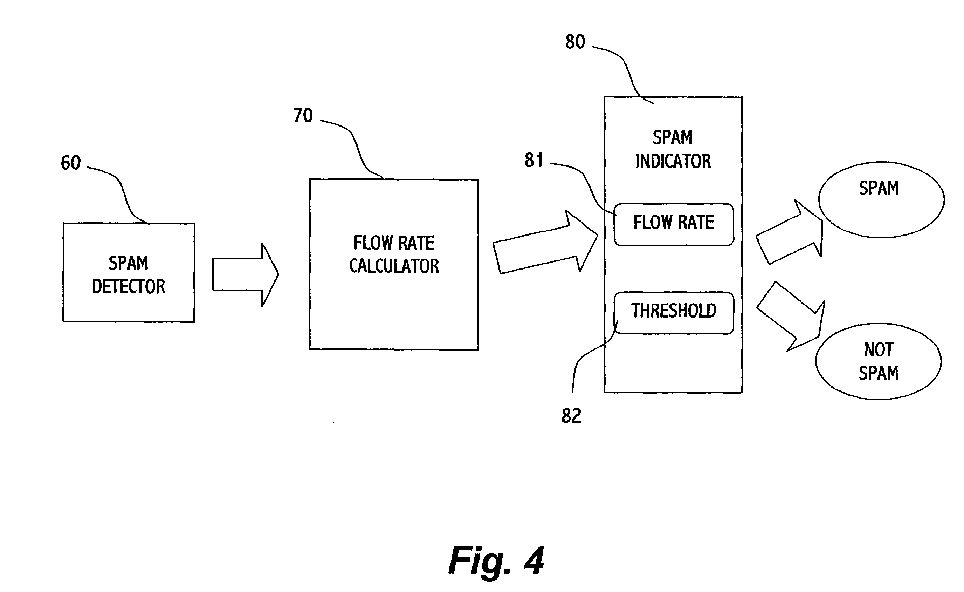

Fig. 4 illustrates further details of the system illustrated in Fig. 3, according to one embodiment of the invention. Whenever the spain detector 60 detects a spam-suspected email message, it notifies the flow rate calculator 70 about it. The flow rate calculator 70 employs the information for calculating the flow rate 71, and sends it to the spam indicator 80. The spam indicator 80 employs the flow rate 71 and a threshold 81 for indicating whether the spam-suspected email messages are indeed spam.

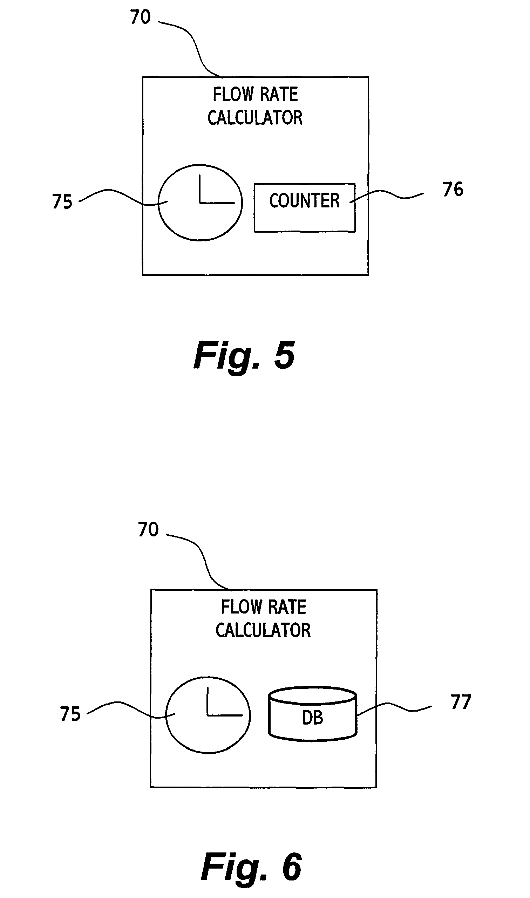

Fig. 5 schematically illustrates a flow-rate calculator, according to one embodiment of the invention. A clock device 75 is employed for counting a time period, and a counter 76 counts the number of suspected email messages that have reached an inspecting point. According to one embodiment of the invention the flow rate is the number of spam-suspected email messages that have reached the inspecting facility 10 (which is located at an inspecting point) during the time period, i.e. the value of the counter at the end of the time period.

Fig. 6 schematically illustrates a flow-rate calculator, according to another embodiment of the invention. A database 77 stores information about spam-suspected email messages that have reached the inspecting facility 10.

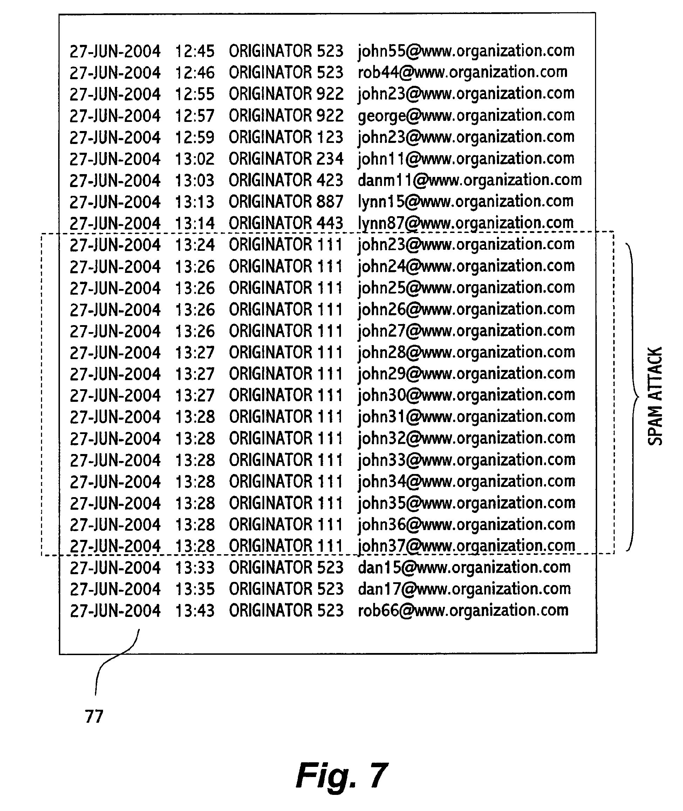

Fig. 7 schematically illustrates a list of incoming email messages to an inspecting point, according to one embodiment of the invention. The list (also referred to as database 77) maintains information of incoming email messages, the time of arrival of each email to the inspecting point, the originator and the email address of the addressee. According to this list, originator 111 is suspected to be a spammer since an unusual number of email messages have been received from him in a short time (e.g. 15 email messages in 4 minutes). Also, the names of the addressees are ordered in an alphabetical order, which may indicate an attempt to cover valid email addresses within the organization. Using this list the flow rate calculator may indicate in every given moment the flow rate during a plurality of time periods, e.g. the flow rate of the last 10 minutes, the flow rate of the last 2 hours, the flow rate of last week, etc. Other information may also be employed in the list, e.g. the email address of the sender (which is not always identical to the originator), the time the email message was sent from the originator, etc.

Of course these methods for calculating flow rate are only examples, and a variety of other methods can be employed.

Those skilled in the art will appreciate that the invention can be embodied by other forms and ways, without losing the scope of the invention. The embodiments described herein should be considered as illustrative and not restrictive.

## Claims

1. A method for identifying and blocking spam email messages at an inspecting point, the method comprising the steps of:
a. measuring a flow rate of email messages sent from an originator through said inspecting point;
b. if the measured flow rate exceeds a given threshold, performing at least one action selected from the group consisting of classifying email messages transmitted from said originator as spam, and classifying said originator as a spammer.

2. A method according to claim 1, further comprising:
c. holding spam suspected email messages at said inspecting point, and
d. releasing said spam suspected email messages upon indicating said messages as non-spam email messages.

3. A method according to claim 1, wherein said flow rate is based on a number of email messages received at said gateway from said originator in a time period.

4. A method according to claim 1, wherein said flow rate is based on a number of email messages received from two or more originators having a common denominator at said gateway in a time period.

5. A method according to claim 4, wherein said common denominator is selected from a group comprising: a domain, an email address, at least one keyword within texts of said email messages, at least one keyword within titles of said email messages, at least one keyword within an email address of the originator of said email messages, at least one keyword within an email address of at least one recipient of said email messages.

6. A method according to claim 1, wherein said inspecting point is selected from a group comprising: a gateway server, a mail server, a firewall server, a proxy server, an ISP server, a VPN server, and a server that filters incoming data to an organization network.

7. A system for identifying and blocking spam email messages at an inspecting point, the system comprising:
- a spam detector, for classifying an email message as spam-suspected;
- a flow rate calculator, for calculating a flow rate of spam-suspected email messages that have arrived at said inspecting point;
- a spam indicator, for classifying spam-suspected email messages as spam by their flow rate and a threshold of said flow rate.

8. A system according to claim 7, wherein said flow rate calculator comprises:
- a clock device, for indicating a time period;
- a counter, for counting spam-suspected email messages;
said flow rate then being computed from said time period and from a count produced by said counter.

9. A system according to claim 7, wherein said flow rate calculator comprises:
- a clock device, for indicating a time period;
- a database, for storing information about spam-suspected email messages that have reached to said inspecting point;
said flow rate then being calculated from said time period and from said information.

10. A system according to claim 7, wherein said spam detector is a computerized facility.

11. A system according to claim 7, wherein said flow rate calculator is a computerized facility.

12. A system according to claim 7, wherein said spam indicator is a computerized facility.
